# EUROPÄISCHE PATENTANMELDUNG

(11) **EP 2 767 798 A1**
(43) Veröffentlichungstag der Anmeldung: **20.08.2014**
(21) Anmeldenummer: 14150100.7
(22) Anmeldetag: 03.01.2014
(51) Int. Cl.: G01B 21/04

(54) **Verfahren zur Reinigung einer optischen Messsonde**

(30) Priorität: 13.02.2013 DE 102013202284
(71) Anmelder: ROBERT BOSCH GMBH, 70442 Stuttgart (DE)
(72) Erfinder: Stratmann, Alexander, 70499 Stuttgart-Weilimdorf (DE); Drabarek, Pawel, 75233 Tiefenbronn (DE); Kasten, Uwe, 71696 Moeglingen (DE); Riegger, Peter, 70825 Korntal-Muenchingen (DE)

(57) **Zusammenfassung**

Die Erfindung betrifft ein Verfahren zur Reinigung einer optischen Messsonde oder einer Messstelle auf der Oberfläche eines Messobjektes, wobei die optische Messsonde einen Sondenmesskopf aufweist und Bestandteil einer optischen Messeinrichtung zum Erfassen der Form, des Abstandes, der Rauigkeit oder der Vibration der Oberfläche des Messobjektes ist, wobei mit mindestens einem optischen Element zum Fokussieren oder Kollimieren ein optischer Messstrahl auf die Messstelle der Oberfläche des Messobjektes gerichtet wird.

Die Erfindung betrifft weiterhin eine optische Messsonde zur Durchführung des erfindungsgemäßen Verfahrens.

## Beschreibung

### Stand der Technik

Die Erfindung betrifft ein Verfahren zur Reinigung einer optischen Messsonde oder einer Messstelle auf der Oberfläche eines Messobjektes, wobei die optische Messsonde einen Sondenmesskopf aufweist und Bestandteil einer optischen Messeinrichtung zum Erfassen der Form, des Abstandes, der Rauigkeit oder der Vibration der Oberfläche des Messobjektes ist, wobei mit mindestens einem optischen Element zum Fokussieren oder Kollimieren ein optischer Messstrahl auf die Messstelle der Oberfläche des Messobjektes gerichtet wird.

Die Erfindung betrifft weiterhin eine optische Messsonde, insbesondere einen Sondenmesskopf, zur Durchführung des erfindungsgemäßen Verfahrens.

Bekannt ist u.a. eine pneumatische Form-Messtechnik für industrielle Anwendungen. Als Messsonden werden dabei pneumatische Messdorne verwendet. Ein Luftstrahl wird z.B. in das Innenprofil eines Prüfobjektes hineingeblasen. Die Luft erzeugt je nach Abstand zum prüfenden Werkstück einen Staudruck in der Zuleitung, der von einer Membran oder einem Druckmesselement aufgenommen wird. Die Auswertung erfolgt gegenüber einem Referenzdruck (Staudruckverfahren) oder einem Referenzkanal (Differenzdruckverfahren).

Für die optische Erfassung der Form, des Durchmessers und der Rauhigkeit von Oberflächen sind interferometrisch arbeitende optische Messsysteme mit einem Modulationsinterferometer und einem diesem nachgeordneten Referenzinterferometer bekannt. Diese werden zur optischen Abstandsmessung, beispielsweise in der Qualitätssicherung bei der Messung von Oberflächengeometrien, benutzt.

Die EP 1 058 812 B1 beschreibt eine solche interferometrische Messeinrichtung zum Erfassen der Form oder des Abstandes insbesondere rauer Oberflächen mit mindestens einer räumlich kohärenten Strahlerzeugungseinheit, deren Strahlung in einer Messsonde der Messeinrichtung in einen durch einen Messreferenzzweig geführten und darin reflektierten Referenzmessstrahl und in einen durch einen Messzweig geführten und an der rauen Oberfläche reflektierten Messstrahl aufgeteilt wird, mit einer Einrichtung zur Modulation der Licht-Phase oder zum Verschieben der Licht-Frequenz entsprechend einer Heterodynfrequenz eines ersten Teilstrahls gegenüber der Licht-Phase oder der Licht-Frequenz eines zweiten Teilstrahls mit einer Überlagerungseinheit zum Überlagern des reflektierten Messreferenzstrahls mit dem reflektierten Messstrahl mit einer Strahlzerlegungs- und Strahlempfangseinheit zum Aufspalten der überlagerten Strahlung auf zumindest zwei Strahlen mit unterschiedlichen Wellenlängen und Umwandeln der Strahlung in elektrische Signale und mit einer Auswerteeinrichtung, in der die Form bzw. der Abstand der rauen Oberfläche auf der Grundlage einer Phasendifferenz der elektrischen Signale bestimmbar ist. Dabei ist vorgesehen, dass die von der Strahlerzeugungseinheit abgegebene Strahlung zeitlich kurzkohärent und breitbandig ist, dass die Strahlerzeugungseinheit, ein Strahlteiler zum Bilden des ersten und zweiten Teilstrahls und die Einrichtung zur Phasenmodulation oder Frequenzverschiebung in einer von der Messsonde räumlich beabstandeten, als Modulationsinterferometer ausgebildeten Baueinheit angeordnet sind und dass in der Baueinheit in dem Strahlengang eines Teilstrahls ein Verzögerungselement angeordnet ist, das eine Differenz der optischen Weglängen der beiden Teilstrahlen ergibt, die länger als die Kohärenzlänge der von der Strahlerzeugungseinheit abgegebenen Strahlung ist.

Derartige Messverfahren weisen gegenüber den zuvor beschriebenen pneumatischen Messverfahren eine deutlich höhere Auflösung auf. Im Vergleich zu einem Luftstrahl kann ein messender Lichtstrahl auf einen Durchmesser im µm-Bereich fokussiert werden, womit neben der Form des Messstückes auch dessen Rauigkeit gemessen werden kann. Nachteilig bei hochauflösenden, optischen Abstandsmesssensoren ist allerdings ihre Empfindlichkeit gegenüber Verschmutzungen, z.B. Öl-Nebel, wie sie üblicherweise in einer mechanischen Fertigungsumgebung auftreten. Daher sind besondere Vorrichtungen erforderlich, die eine Reinigung der Messsensoren zwischen zwei Messungen oder während der Messung ermöglichen.

In der DE 3241710 A1 wird beispielsweise ein elektro-optischer Tastkopf in einer austauschbaren Halterung auf einer Maschine zur Prüfung von Werkstücken beschrieben. U.a. ist dabei vorgesehen, dass die Oberfläche des zu prüfenden Teils und/ oder die Fenster des Tasters beblasen, abgesaugt oder gewischt werden, womit eine Reinigung erzielt werden kann. Zu Reinigungszwecken kann Druckluft durch Düsen geblasen werden.

In der Gebrauchsmuster-Schrift DE-G 8510312.8 wird eine optische Prüfvorrichtung zum Prüfen der Oberflächenbeschaffenheit von bewegten Werkstücken während ihrer Bearbeitung auf einer Schleifmaschine, insbesondere von rotierenden Werkstücken auf Rundschleifmaschinen beschrieben, wobei diese einen Licht auf einen Oberflächenabschnitt des Werkstückes aussendenden und reflektiertes Licht empfangenden Prüfkopf aufweist. Dabei ist vorgesehen, dass der Prüfkopf vom Werkstück entfernt angeordnet ist und dass am Prüfkopf ein Ende eines Lichtleitfaserbündels befestigt ist, dessen zweites Ende an einem Tastkopf angebracht ist und dass der Tastkopf zum Aussenden des von dem Prüfkopf abgebenden und zum Empfangen des an der Werkstückoberfläche reflektierten Lichts auf einen zu prüfenden Oberflächenabschnitt des eingespannten Werkstückes ausrichtbar ist. Zudem wird u.a. in dieser Schrift beschrieben, dass die Lichteintritts- und Lichtaustrittsöffnung des Tastkopfes mit einer einen Druckluftanschluss aufweisenden Ringdüse umgeben ist. Weiterhin kann vorgesehen sein, dass die Ringdüse exzentrisch ausgebildet ist, derart, dass ihr Luftaustrittsquerschnitt entgegen der Bewegungsrichtung des Werkstückes größer ist als in dessen Bewegungsrichtung.

Die zuvor beschriebenen Ansätze zeigen zwar vom Prinzip Reinigungsmöglichkeiten bei optischen Tastsensoren auf, allerdings sind die darin beschrieben Vorrichtungen wenig geeignet, ein derartiges Reinigungskonzept auf hoch präzise und hochauflösende optische Messsysteme, wie sie beispielsweise in der zuvor zitierten EP 1 058 812 B1 beschrieben sind, zu übertragen.

Es ist daher Aufgabe der Erfindung, eine spezielle optische Messsonde zu konzipieren, die einerseits geeignet ist, derartige Messaufgaben zu leisten und andererseits robust genug gegenüber Verschmutzungen ist.

Es ist weiterhin Aufgabe der Erfindung, ein entsprechendes Reinigungsverfahren für derartige optische Messsonden bereit zu stellen.

### Offenbarung der Erfindung

Die das Reinigungsverfahren betreffende Aufgabe wird gemäß den Merkmalen nach den Ansprüchen 1 bis 6 gelöst.

Die die optische Messsonde betreffende Aufgabe wird gemäß den Merkmalen nach den Ansprüchen 7 bis 14 gelöst.

Die das Verfahren betreffende Aufgabe wird dadurch gelöst, dass ein oder mehrere Druckluftströme aus dem Sondenmesskopf auf die Oberfläche des Messobjektes im Bereich der Messstelle oder auf ein Lichtaustrittsfenster der Fokusiereinheit oder auf eine Fokusierlinse des Sondenmesskopfes gerichtet werden. Damit kann insbesondere in einer rauen Fertigungsumgebung eine Verschmutzung des Sondenmesskopfes verhindert werden. Die Beaufschlagung der Messstelle sorgt zudem dafür, dass Messfehler infolge z.B. anhaftender Schmutzpartikel auf der Oberfläche des Messobjektes, verhindert werden, da diese mit dem Reinigungsverfahren entfernbar sind.

Eine besonders effektive Reinigungswirkung der Oberfläche des Messobjektes kann erzielt werden, wenn die Oberfläche des Messobjektes im Bereich der Messstelle mit fokussierten und gerichteten Druckluftströmen angeblasen wird, wobei sich die Druckluftströme auf der Oberfläche des Messobjektes im Bereich der Messstelle treffen. Durch diese kegelförmige Luftströmung können anhaftende Schmutzpartikel besonders gut entfernt werden. Zudem wird verhindert, dass sich beispielsweise ein Öl-Nebel oder umher fliegende Schmutzpartikel auf dem Lichtaustrittsfenster der Fokusiereinheit oder auf der Fokusierlinse niederschlagen können.

In einer Verfahrensvariante kann vorgesehen sein, dass mindestens ein Druckluftstrom auf die Oberfläche des Messobjektes im Bereich der Messstelle gerichtet und die Luft zwischen Oberfläche und Sondenmesskopf abgesaugt wird, wobei eine Art Luftpolster zum Schutz gegen eine Verschmutzung des Lichtaustrittsfensters der Fokusiereinheit oder der Fokusierlinse ausgebildet wird.

Besonders vorteilhaft kann es dabei sein, wenn die Luftströmungen im Bereich der Messstelle im Wesentlichen parallel zur Oberfläche des Messobjektes geführt werden. Damit kann eine Art Wischbewegung für die anhaftenden Schmutzpartikel auf der Oberfläche des Messobjektes erzielt werden. Zudem führt eine derartige Luftströmung zu weniger Vibrationen des Messobjektes, was insbesondere vorteilhaft bei filigranen Messobjekten sein kann.

Zur Vermeidung z.B. eines Öl-Nebel-Niederschlages kann es zudem vorteilhaft sein, wenn mindestens ein Druckluftstrom im Wesentlichen parallel zur Oberfläche des Lichtaustrittsfensters der Fokusiereinheit oder parallel zur Oberfläche der Fokusierlinse des Sondenmesskopfes geführt wird.

Eine bevorzugte Verfahrensvariante sieht vor, dass während der Messphase die Oberfläche des Messobjektes ständig oder zumindest zeitweise, z.B. pulsartig, mit den Druckluftströmungen beaufschlagt wird. Eine pulsartige Beaufschlagung der Messstelle kann dabei besonders vorteilhaft zur Schmutzentfernung eingesetzt werden. Zudem kann vorgesehen sein, dass das Lichtaustrittsfenster der Fokusiereinheit oder die Fokusierlinse dauerhaft und/ oder vor der Messung und/ oder in einer Parkposition nach der Messung mit den Druckluftströmungen beaufschlagt wird. Eine dauerhafte Beaufschlagung verhindert besonders effektiv einen Niederschlag von Öl-Nebel bzw. Schmutzpartikel und schützt somit das Lichtaustrittsfenster der Fokusiereinheit oder die Fokusierlinse während der gesamten Messphase.

Die die optische Messsonde betreffende Aufgabe wird dadurch gelöst, dass im Sondenmesskopf Luftkanäle zur Selbstreinigung der Optik oder Reinigung der Messstelle angeordnet sind, welche über Ventile mit einer Druckluftanlage verbunden sind und über die ein oder mehrere Luftströme durch Öffnungen an der dem Messobjekt gegenüber liegenden Seite des Sondenmesskopfes auf die Oberfläche des Messobjektes oder auf ein Lichtaustrittsfenster der Fokusiereinheit oder auf eine Fokusierlinse des Sondenmesskopfes beaufschlagbar sind. Die Öffnungen sind dabei um das Lichtaustrittsfenster oder um die Fokusierlinse angeordnet. Damit kann besonders effektiv das vorgeschlagene Reinigungsverfahren durchgeführt werden.

Eine bevorzugte Ausführungsvariante sieht vor, dass über zumindest einen ersten Luftkanal durch eine als Luftaustritt dienende erste Öffnung die Oberfläche des Messobjektes im Bereich der Messstelle fokussiert und gerichtet mit einem Luftstrahl beaufschlagbar ist. Diese erste Öffnung ist dabei als Blas-Düse ausgeformt und kann einen räumlich scharf abgegrenzten Luftstrahl erzeugen.

Weiterhin kann über zumindest einen zweiten Luftkanal durch eine als Luftaustritt dienende zweite Öffnung die Oberfläche des Messobjektes im Bereich der Messstelle fokussiert und gerichtet mit einem zweiten Luftstrahl zusätzlich beaufschlagt werden, so dass sich ein kegelartiger Luftstrom, gerichtet auf die Oberfläche des Messobjektes, ausbildet. Alternativ dazu kann auch über den zweiten Luftkanal durch eine dann als Lufteintritt dienende zweite Öffnung die Luft im Bereich zwischen Messstelle und Sondenmesskopf absaugbar sein, was vorteilhaft hinsichtlich der zuvor beschriebenen Ausbildung eines Luftpolsters zwischen der Oberfläche des Messobjektes und dem Lichtaustrittsfenster oder der Fokusierlinse ist.

Eine besonders effektive Reinigung kann dabei erzielt werden, wenn der Schnittpunkt der beiden Luftstrahle aus der ersten und zweiten Öffnung mit der Ebene der Oberfläche des Messobjektes im Bereich der Messstelle zusammen fallen. In diesem "Brennpunkt" können anhaftende Schmutzpartikel besonders leicht entfernt werden.

Alternativ kann es zur Ausbildung des zuvor beschriebenen Wischeffektes von Vorteil sein, wenn über zumindest zwei der Luftkanäle ein Luftstrom im Wesentlichen parallel zur Oberfläche des Messobjektes erzeugbar ist, wobei ein Luftkanal eine Öffnung zum Blasen und der andere Luftkanal eine Öffnung zum Absaugen aufweist.

Ein Niederschlag von z.B. Öl-Nebel, welcher von der mechanischen Bearbeitung des Messobjektes herrühren kann, oder die Ablagerung von Schmutzpartikel kann verhindert werden, wenn über zumindest zwei der Luftkanäle ein Luftstrom im Wesentlichen parallel zur Oberfläche des Lichtaustrittsfensters der Fokusiereinheit oder parallel zur Oberfläche der Fokusierlinse des Sondenmesskopfes erzeugbar ist, wobei ein Luftkanal eine als Blasöffnung oder Blasdüse ausgeführte Luftaustrittsöffnung und der andere Luftkanal eine als Saugöffnung ausgebildete Lufteintrittsöffnung aufweist. Um besondere Absaugvorrichtungen bzw. Unterdruckerzeugungseinheiten einsparen zu können, kann es vorteilhaft sein, wenn die einzelnen Luftkanäle zumindest paarweise in Verbindung stehen und unter Ausnutzung eines Venturi-Effektes durch die Blas-Luftströmung in einem der Luftkanäle im jeweils anderen Luftkanal ein Unterdruck zur Absaugung erzeugbar ist. Dabei können bei entsprechender Ausgestaltung der Luftkanäle und der Öffnungen Effekte, wie sie z.B. von Wasserstrahlpumpen bekannt sind, genutzt werden.

Um die Reinigungswirkung zu verstärken, können weitere Blas- bzw. Absaugöffnungen am Kopfende des Sondenmesskopfes angeordnet sein. Zudem kann ggf. eine zyklonartige Strömung um den Messstrahl und/ oder auf der Oberfläche des Messobjektes um den Bereich der Messstelle erzeugbar sein. Durch eine derartige Rotation der Luftströmung im Bereich der Messstelle können Schmutzpartikel leichter von der Oberfläche des Messobjektes entfernt werden.

Eine besonders bevorzugte Verwendung der optischen Messsonde, wie sie zuvor in ihren Varianten beschrieben wurde, sieht den Einsatz in einer interferometrischen Messeinrichtung zur Form- oder Durchmesserbestimmung von mechanischen Werkstücken während ihrer Bearbeitung vor. Dabei kann auch das zuvor beschriebene Reinigungsverfahren mit seinen Varianten vorteilhaft eingesetzt werden. Derartige Messeinrichtungen können der eingangs erwähnten Messeinrichtung, wie sie in der EP 1 058 812 B1 beschrieben wurde, entsprechen. Hiermit lässt sich präzise und hoch - aufgelöst die Topografie eines Werkstückes im µm-Bereich abtasten oder gar Bewegungen, wie Vibrationen detektieren und messen, ohne dass z.B. Öl-Nebel oder Schmutzpartikel die Messungen negativ beeinflussen.

### Kurze Beschreibung der Zeichnungen

Die Erfindung wird im Folgenden anhand eines in den Figuren dargestellten Ausführungsbeispiels näher erläutert. Es zeigen:
Figur 1 in einer schematischen Darstellung eine optische Messeinrichtung mit einer optischen Messsonde,
Figur 2 die optische Messsonde in einer Schnittdarstellung und
Figur 3 einen Strömungsverlauf zur Reinigung der Oberfläche eines Messobjektes.

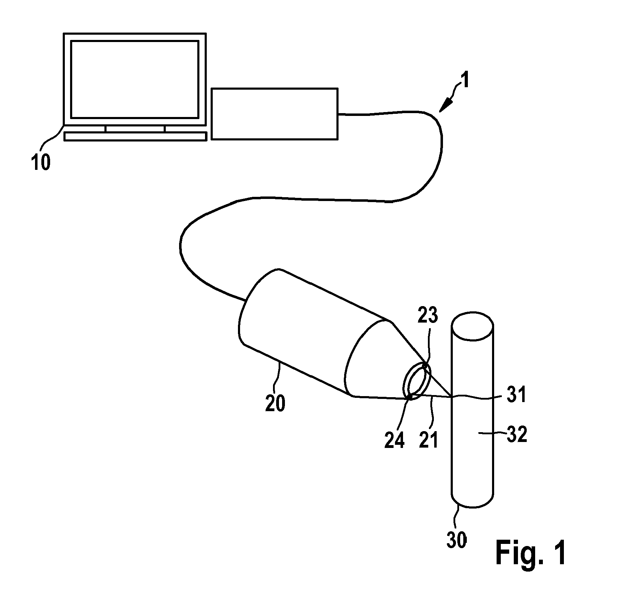

Figur 1 zeigt in einer schematischen Darstellung eine optische Messeinrichtung 1 mit einer optischen Messsonde. Die optische Messsonde ist in dem gezeigten Ausführungsbeispiel Teil einer nicht dargestellten interferometrischen Messeinrichtung zur Erfassung der Oberflächentopografie, z.B. der Form, des Innen- oder Außendurchmessers bzw. der Rauigkeit eines Messobjektes 30, wie sie beispielsweise in der EP 1 058 812 B1 beschrieben ist. Die optische Messsonde besteht im Wesentlichen aus einem Sondenmesskopf 20 und ist Teil eines Tastarmes einer nicht dargestellten Formmessmaschine. Der Sondenmesskopf 20 ist über einen Lichtleiter mit einer Auswerteeinheit 10 gekoppelt und kann räumlich gegenüber einer zu messenden Oberfläche 32 des Messobjektes 30 positioniert werden. Dabei wird ein Messstrahl 21 über eine Fokusiereinheit im Sondenmesskopf 20 auf eine Messstelle 31 der zu messenden Oberfläche 32 des Messobjektes 30 gebündelt.

Zur Reinigung der Messstelle 31 weist der Sondenmesskopf 20 im Bereich um die Austrittsstelle des Messstrahls 21 Öffnungen 23, 24 für einen Lufteintritt bzw. Luftaustritt auf.

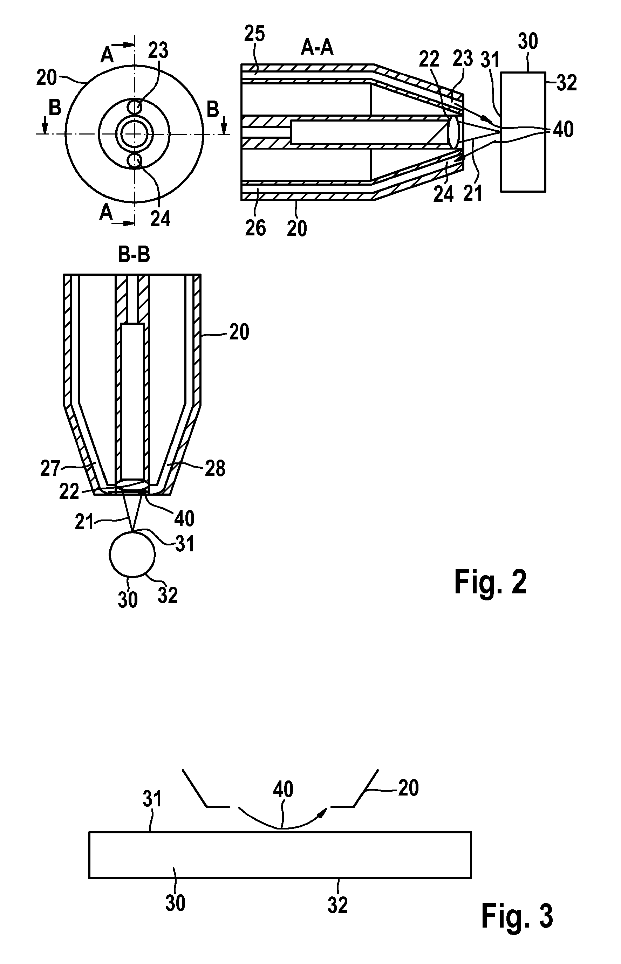

In Figur 2 ist der Sondenmesskopf 20 in einer schematischen Schnittdarstellung entlang zweier senkrecht zueinander verlaufenden Schnitte AA und BB dargestellt. Dabei sind in den Schnittansichten lediglich die für das Reinigungsprinzip wichtigen Merkmale gezeigt. Weitere Details im Sondenmesskopf 20, wie beispielsweise ein Sensor für ein z.B. kurzkohärentes Interferometer, ein Autofokus-Sensor oder ein chromatischer Sensor, sind hinsichtlich einer besseren Übersichtlichkeit nicht dargestellt.

Die Schnittansicht entlang des Schnitts AA zeigt im Zentrum des Sondenmesskopfes 20 einen Hohlraum, in dem das Messlicht über einen optischen Lichtleiter aus Glas, Quarz oder hochtransparentem Kunststoff in einer Fokusiereinheit eingekoppelt wird. Die Fokusiereinheit weist zum Messobjekt 30 hin ein Lichtaustrittsfenster zum Schutz von in der Fokusiereinheit befindlichen Linsen oder eine äußere Fokusierlinse 22 auf. Der Messstrahl 21 wird mit der Fokusierlinse 22 bzw. dem Linsensystem in der Fokusiereinheit auf die Messstelle 31 der zu messenden Oberfläche 32 des Messobjektes 30 gebündelt.

Zur Reinigung der Oberfläche 32 im Bereich der Messstelle 31 sind ein erster Luftkanal 25 und ein zweiter Luftkanal 26 im Sondenmesskopf 20 vorgesehen, mit dem Luft über die in Figur 1 dargestellten Öffnungen 23, 24 auf die Messstelle 31 geblasen werden kann. Die beiden Öffnungen 23, 24 sind dabei gegenüberliegend um das Lichtaustrittsfenster bzw. um die Fokusierlinse 22 angeordnet. Dabei wird ein fokussiert gerichteter Luftstrahl auf das Messobjekt 30 geleitet. Zum einen kann vorgesehen sein, dass über die Luftkanäle 25, 26 aus beiden Öffnungen 23, 24 jeweils ein Luftstrahl auf die Messstelle 31 geblasen wird, der sich in der Ebene der zu messenden Oberfläche 32 im Bereich der Messstelle 31 trifft, oder, wie dies beispielhaft Figur 2 anhand eines Strömungsverlaufs 40 zeigt, ein Luftstrom über den ersten Luftkanal 25 aus der ersten Öffnung 23 (Luftaustrittsöffnung) auf die Messstelle 31 geblasen und über die zweite Öffnung 24 die Luft über den zweiten Luftkanal 26 abgesaugt wird. Beide Varianten können zumindest zeitweise, z.B. in einem Pulsbetrieb, während der Messung oder bedarfsweise durchgeführt werden. Weiterhin ist auch ein alternierender Betrieb beider Verfahrensarten möglich.

Die Schnittansicht entlang des Schnitts BB zeigt in Figur 2 einen dritten und vierten Luftkanal 27, 28, deren Austrittsöffnungen derart gerichtet sind, dass ein zur Oberfläche des Lichtaustrittsfensters der Fokusiereinheit bzw. zur Oberfläche der Fokusierlinse 22 eine im Wesentlichen parallele Strömung erzeugt werden kann, wobei über den dritten Luftkanal 27 ein Luftstrom zur Mitte des Lichtaustrittsfensters der Fokusiereinheit bzw. zur Fokusierlinse 22 geblasen wird und über den vierten Luftkanal 28 der Luftstrom abgesaugt wird. Damit kann das Lichtaustrittsfenster der Fokusiereinheit bzw. die Fokusierlinse 22 vor oder nach der Messung oder auch während der Messung gereinigt werden. Zudem kann mittels eines ständigen Luftstroms während der Messung verhindert werden, dass sich Öl-Nebel oder Schmutzpartikel auf dem Lichtaustrittsfenster bzw. der Fokusierlinse 22 absetzen können.

In Figur 3 ist schematisch ein Strömungsverlauf 40 gezeigt, der sich insbesondere bei einer kombinierten Beblasung aus einer Öffnung und einer Absaugung aus einer anderen Öffnung als vorteilhaft herausgestellt hat. Der Luftstrom wird dabei derart gelenkt, dass über der Messstelle 31 der zu messenden Oberfläche 32 des Messobjektes 30 eine zur Oberfläche 32 nahezu parallel Strömung erzeugt wird.

In weiteren nicht dargestellten Ausführungsvarianten kann die Luftführung derart ausgeführt sein, dass die einzelnen Luftkanäle 25, 26, 27, 28 zumindest paarweise in Verbindung stehen und unter Ausnutzung eines Venturi-Effektes durch die Luftströmung in einem der Luftkanäle 25, 27 im jeweils anderen Luftkanal 26, 28 ein Unterdruck zur Absaugung erzeugt wird.

Weiterhin können statt der in Figur 2 dargestellten Ausführungsform auch weitere Blas-bzw. Absaugöffnungen am Kopfende des Sondenmesskopfes 20 angeordnet sein. Ebenfalls denkbar ist eine Düsenanordnung, bei der eine zyklonartige Strömung um den Messstrahl 21 bzw. auf der Oberfläche 32 im Bereich der Messstelle 31 erzeugt wird, um die Reinigungswirkung zu erhöhen.

## Patentansprüche

1. Verfahren zur Reinigung einer optischen Messsonde oder einer Messstelle (31) auf der Oberfläche (32) eines Messobjektes (30), wobei die optische Messsonde einen Sondenmesskopf (20) aufweist und Bestandteil einer optischen Messeinrichtung (1) zum Erfassen der Form, des Abstandes, der Rauigkeit oder der Vibration der Oberfläche (32) des Messobjektes (30) ist, wobei mit mindestens einem optischen Element zum Fokussieren oder Kollimieren ein optischer Messstrahl (21) auf die Messstelle (31) der Oberfläche (32) des Messobjektes (30) gerichtet wird, **dadurch gekennzeichnet, dass** ein oder mehrere Druckluftströme aus dem Sondenmesskopf (20) auf die Oberfläche (32) des Messobjektes (30) im Bereich der Messstelle (31) oder auf ein Lichtaustrittsfenster der Fokusiereinheit oder auf eine Fokusierlinse (22) des Sondenmesskopfes (20) gerichtet werden.

2. Verfahren nach Anspruch 1, **dadurch gekennzeichnet, dass** die Oberfläche (32) des Messobjektes (30) im Bereich der Messstelle (31) mit fokussierten und gerichteten Druckluftströmen angeblasen wird, wobei sich die Druckluftströme auf der Oberfläche (32) des Messobjektes (30) im Bereich der Messstelle (31) treffen.

3. Verfahren nach Anspruch 1, **dadurch gekennzeichnet, dass** mindestens ein Druckluftstrom auf die Oberfläche (32) des Messobjektes (30) im Bereich der Messstelle (31) gerichtet und die Luft zwischen Oberfläche (32) und Sondenmesskopf (20) abgesaugt wird.

4. Verfahren nach Anspruch 3, **dadurch gekennzeichnet, dass** die Luftströmungen im Bereich der Messstelle (31) im Wesentlichen parallel zur Oberfläche (32) des Messobjektes (30) geführt werden.

5. Verfahren nach Anspruch 1, **dadurch gekennzeichnet, dass** mindestens ein Druckluftstrom im Wesentlichen parallel zur Oberfläche des Lichtaustrittsfensters der Fokusiereinheit oder parallel zur Oberfläche der Fokusierlinse (22) des Sondenmesskopfes (20) geführt wird.

6. Verfahren nach einem der Ansprüche 1 bis 5, **dadurch gekennzeichnet, dass** während der Messphase die Oberfläche (32) des Messobjektes (30) ständig oder zumindest zeitweise und/ oder das Lichtaustrittsfenster der Fokusiereinheit oder die Fokusierlinse (22) dauerhaft oder vor der Messung und/ oder in einer Parkposition nach der Messung mit den Druckluftströmungen beaufschlagt werden.

7. Optische Messsonde als Bestandteil einer optischen Messeinrichtung (1) zum Erfassen der Form, des Abstandes, der Rauigkeit oder der Vibration von Oberflächen (32) von Messobjekten (30), welche einen Sondenmesskopf (20) mit mindestens einem optischen Element zum Fokussieren oder Kollimieren eines optischen Messstrahls (21) auf eine Messstelle (31) der Oberfläche (32) des Messobjektes (30) aufweist, **dadurch gekennzeichnet, dass** im Sondenmesskopf (20) Luftkanäle (25, 26, 27, 28) zur Selbstreinigung der Optik oder Reinigung der Messstelle (31) angeordnet sind, welche über Ventile mit einer Druckluftanlage verbunden sind und über die ein oder mehrere Luftströme durch Öffnungen (23, 24) an der dem Messobjekt (30) gegenüber liegenden Seite des Sondenmesskopfes (20) auf die Oberfläche (32) des Messobjektes (30) oder auf ein Lichtaustrittsfenster der Fokusiereinheit oder auf eine Fokusierlinse (22) des Sondenmesskopfes (20) beaufschlagbar sind.

8. Optische Messsonde nach Anspruch 7, **dadurch gekennzeichnet, dass** über zumindest einen ersten Luftkanal (25) durch eine als Luftaustritt dienende erste Öffnung (23) die Oberfläche (32) des Messobjektes (30) im Bereich der Messstelle (31) fokussiert und gerichtet mit einem Luftstrahl beaufschlagbar ist.

9. Optische Messsonde nach Anspruch 7 oder 8, **dadurch gekennzeichnet, dass** über zumindest einen zweiten Luftkanal (26) durch eine als Luftaustritt dienende zweite Öffnung (24) die Oberfläche (32) des Messobjektes (30) im Bereich der Messstelle (31) fokussiert und gerichtet mit einem zweiten Luftstrahl zusätzlich beaufschlagbar ist oder über den zweiten Luftkanal (26) durch eine als Lufteintritt dienende zweite Öffnung (24) die Luft im Bereich zwischen Messstelle (31) und Sondenmesskopf (20) absaugbar ist.

10. Optische Messsonde nach Anspruch 9, **dadurch gekennzeichnet, dass** der Schnittpunkt der beiden Luftstrahle aus der ersten und zweiten Öffnung (23, 24) mit der Ebene der Oberfläche (32) des Messobjektes (30) im Bereich der Messstelle (31) zusammen fallen.

11. Optische Messsonde nach Anspruch 9, **dadurch gekennzeichnet, dass** über zumindest zwei der Luftkanäle (25, 26) ein Luftstrom im Wesentlichen parallel zur Oberfläche (32) des Messobjektes (30) erzeugbar ist, wobei ein Luftkanal (25) eine Öffnung (23) zum Blasen und der andere Luftkanal (26) eine Öffnung (24) zum Absaugen aufweist.

12. Optische Messsonde nach Anspruch 7, **dadurch gekennzeichnet, dass** über zumindest zwei der Luftkanäle (27, 28) ein Luftstrom im Wesentlichen parallel zur Oberfläche des Lichtaustrittsfensters der Fokusiereinheit oder parallel zur Oberfläche der Fokusierlinse (22) des Sondenmesskopfes (20) erzeugbar ist, wobei ein Luftkanal (26) eine als Blasöffnung ausgeführte Luftaustrittsöffnung und der andere Luftkanal (27) eine als Saugöffnung ausgebildete Lufteintrittsöffnung aufweist.

13. Optische Messsonde nach einem der Ansprüche 7 bis 12, **dadurch gekennzeichnet, dass** die einzelnen Luftkanäle (25, 26, 27, 28) zumindest paarweise in Verbindung stehen und unter Ausnutzung eines Venturi-Effektes durch die Blas-Luftströmung in einem der Luftkanäle (25, 27) im jeweils anderen Luftkanal (26, 28) ein Unterdruck zur Absaugung erzeugbar ist.

14. Optische Messsonde nach einem der Ansprüche 7 bis 13, **dadurch gekennzeichnet, dass** weitere Blas- bzw. Absaugöffnungen am Kopfende des Sondenmesskopfes (20) angeordnet sind und/ oder eine zyklonartige Strömung um den Messstrahl (21) und/ oder auf der Oberfläche (32) des Messobjektes (30) um den Bereich der Messstelle (31) erzeugbar ist.

15. Anwenden des Reinigungsverfahrens nach einem der Ansprüche 1 bis 6 und Verwendung der optischen Messsonde nach einem der Ansprüche 7 bis 14 in einer interferometrischen Messeinrichtung zur Form- oder Durchmesserbestimmung von mechanischen Werkstücken während ihrer Bearbeitung.
